# EUROPEAN PATENT SPECIFICATION

(11) **EP 0 271 119 B1**
(45) Date of publication and mention of the grant of the patent: **24.02.1993**
(21) Application number: 87202100.1
(22) Date of filing: 30.10.1987
(51) Int. Cl.: A01B 49/02, A01B 49/06, A01B 63/24

(54) **A soil cultivating machine**
Bodenbearbeitungsmaschine
Machine à cultiver le sol

(30) Priority: 04.11.1986 NL 8602785; 03.02.1987 NL 8700254; 25.02.1987 NL 8700466
(43) Date of publication of application: 15.06.1988
(60) Divisional application: 91203161.4
(73) Proprietor: C. van der Lely N.V., NL-3155 PD Maasland (NL)
(72) Inventor: van der Lely, Ary, Maasland (NL); Bom, Cornelis Johannes Gerardus, Rozenburg (NL)
(74) Representative: Mulder, Herman

(56) References cited:
- EP-A- 0 153 765
- EP-A- 0 166 493
- EP-A- 0 182 432
- DE-A- 3 431 333
- FR-A- 2 414 856
- FR-A- 2 536 948
- FR-A- 2 560 480
- GB-A- 2 153 642
- NL-A- 7 314 805
- NL-A- 8 003 243

## Description

The invention relates to a soil cultivating machine comprising a carrier wherein are supported a plurality of rotary soil working members and therebehind is arranged a height-adjustable roller, which roller is designed as a packer roller and includes at its rear side a carrier for scraper members, on which carrier there are arranged seed pipes of an implement for introducing material into the soil.

Such a soil cultivating machine is known from FR-A-2 536 948. In this document the machine comprises an implement for introducing seed material into soil, which implement, including the seed pipes, is rigidly connected to a carrier for the roller. This construction has the disadvantage that, when the roller is adjusted to effect a change in working depth of the soil working members, the position of the seed pipes relative to the ground is changed, with the consequence that clogging of the seed pipes or damage thereto may be possible.

The object of the invention is to improve the above soil cultivating machine in order to obviate or at least to mitigate the above disadvantageous consequences. According to the invention the soil cultivating machine is thereto characterized in that the carrier for the scraper members is movable independently relative to the roller and lockable in a plurality of positions. In this manner it is achieved that upon adjustment of the roller in order to effect a change in working depth of the soil working members an after-setting of the position of the seed pipes is possible. Although in the construction of the French document the seed pipes are movable and lockable in a plurality of positions, namely by means of the hydraulic ram 22, the aim of the present invention can not be achieved as, the seed pipes in said French construction will move together with the roller. Besides, it is possible for the carrier with the seed pipes to be hinged upwardly on the headland, through which clogging of the seed pipes or damage thereto can be prevented. Moreover, with this construction it is possible to provide such a movability of the carrier for the scraper members that, if there is used a height-movable frame portion for the soil working members, the movement of this frame portion is not impeded by the presence of the carrier for the scraper members.

For a better understanding of the invention and to show how the same may be carried into effect, reference will now be made, by way of example, to the accompanying drawings, in which:
Figure 1 is a schematical plan view of a soil cultivating machine according to the invention, which machine comprises two mutually transport-foldable carriers for the soil working members and is combined with an implement for introducing material into the soil, in particular a seed drill;
Figure 2 is a side view of the assembly shown in Figure 1;
Figure 3 is, to an enlarged scale, a view taken in the direction of the arrow III in Figure 1;
Figure 4 is, to an enlarged scale, a view taken on the line IV-IV in Figure 1;
Figure 5 is a view taken in the direction of the arrow V in Figure 4;
Figure 6 is a view in accordance with Figure 5 showing a second embodiment of the support of the seed pipes of a seed drill, and
Figure 7 is a view taken in the direction of the arrow VII in Figure 6.

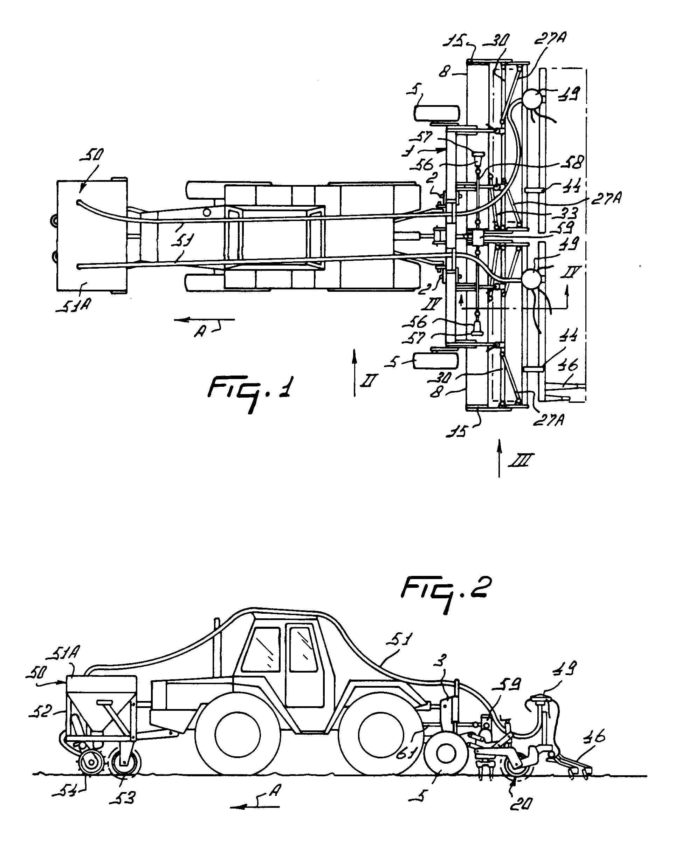

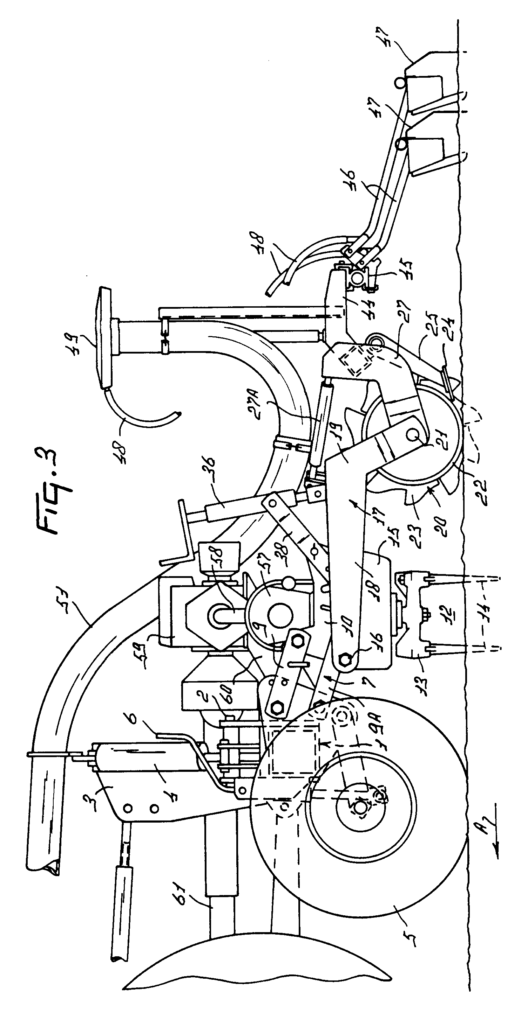

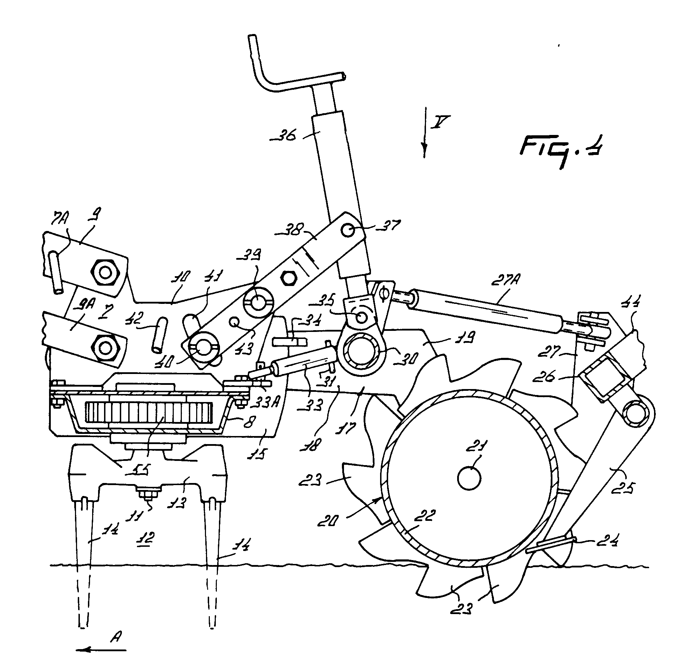

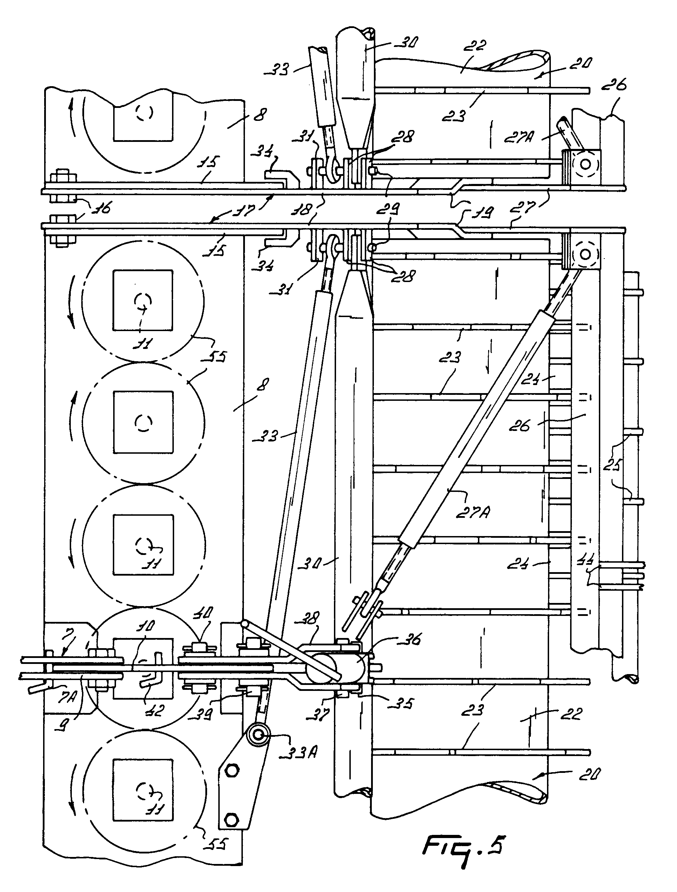

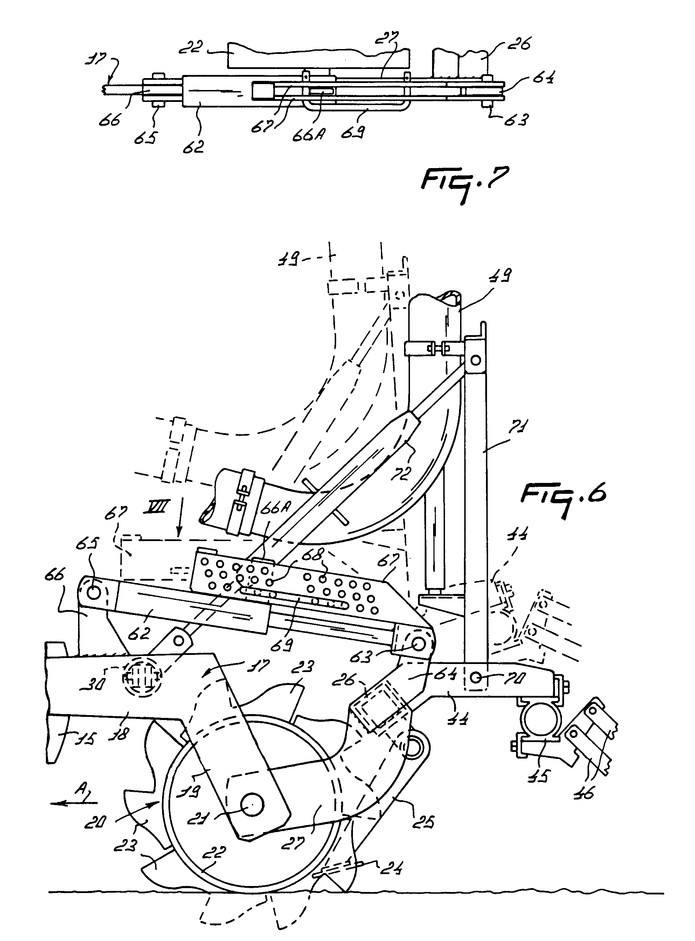

The implement shown in the drawings concerns a soil cultivating machine, in particular one for the preparation of a seed bed. The machine comprises a frame beam 1 which extends transversely to the direction of operative travel A and is located at least substantially horizontally. The frame beam 1 consists of three portions which are in alignment and are pivotably interconneted by means of pins 2 extending in the direction of operative travel A. The central portion is provided with a trestle 3 having a three-point connection for coupling to the three-point lifting hitch of a tractor. Between the outer portions and the trestle 3 there are provided hydraulical adjusting cylinders 4, by means of which said outer portions can be folded relative to said central portion about the pins 2. At the ends facing away from each other, the outer portions of the frame beam 1 are each provided with a ground wheel 5 which is adjustable in height by means of a threaded spindle of. Furthermore, each of the outer portions of the frame beam 1 is provided near its end with a hinged parallelogram construction 7, by means of which a carrier 8 is arranged movably in height relative to the portions. Each parallelogram construction 7 comprises two arms 9 and 9A, which are superposed and are pivotably mounted on an upwardly directed plate 10 arranged at the upper side of a carrier 8. Each of the carriers 8, which are in alignment, supports at least substantially vertical shafts 11 of soil working members 12, which shafts are interspaced equidistantly at preferably 25 cms. Each oil working member 12 includes an at least substantially horizontal carrier 13 which is arranged at the end of a shaft 11 extending from the bottom of a carrier 8 and at its ends provided with downwardly extending soil working element 14 afforded by tines. The end of each of the respective carriers 8 is closed by means of an upwardly directed plate 15 extending at least substantially parallel to a vertical lane in the direction of operative travel A of the machine. Near its front side, each of the plates 15 is provided with h a pin 16 extending transversely to the direction of operative travel A, the arrangement being such that the pins 16 are in alignment. About each pin 16 there is freely pivotable an arm 17, which arm extends rearwardly along the outer side of the plate 15. Each arm 17 has a portion 18 which extends at least substantially horizontally and merges into a portion 19 extending obliquely downwardly and rearwardly. Between the ends of the portions 19 there is arranged freely rotatably a roller 20 by means of shafts 21 supported in bearing housings. In this embodiment, the roller 20 is designed as a packer roller, which roller comprises a cylindrical portion 22 which at its outer circumference is provided with equidistantly interspaced crowns of plate-shaped cams 23. Between the respective crowns of cams 23 there are located scraper members 24. Each of the scraper members 24 is provided at a lower end of an obliquely upwardly and rearwardly extending arm 25. The arms 25 are mounted together on a carrier or beam 26, which extends at least substantially parallel to the axis of rotation of the roller 20. The carrier 26 is arranged near the upper ends of hook-shaped arms 27 which, by means of their other, forwardly directed ends, are freely rotatable about the shafts 21 of the roller 20. By means of a pair of lugs 28 and a pin 29 extending in the direction of operative travel A, there is arranged between the portions 18 of the arms 17 an end of a cross beam or carrier 30, which beam extends at least substantially parallel to the axis of rotation of the roller 20. The cross beam 30 together with the arms 17 constitutes a carrier construction for the roller 20. At the portions 18 of the arms 17, which during operation are located at the facing ends of the rollers 20, there is arranged movably in front of the cross beam 30 an end of a stabilizer rod 33 by means of a lug 31 and the pin 29. The other end of the stabilizer rod 33 is arranged movably about a vertical pin 33A provided near the centre at the rear side of a carrier 8. The length of the stabilizer rod 33 is adjustable. The portions 18 of the arms 17 are each provided with a guide means 34, which are located at the inner sides and co-operate with the rear sides of the plates 15. By means of a horizontal pin 35 extending transversely to the direction of operative travel A, there is arranged freely movably the lower end of a threaded spindle 36 on the cross beam 30 at the level of the plates 10 on the upper side of each carrier 8. By means of a horizontal pin 37 extending transversely to the direction of operative travel A, there are arranged freely movably exactly below the centre of the threaded spindle 36 the ends of two connecting strips 38 (Figures 4 and 5). Near the centre, the connecting strips 38 are arranged freely movably by means of a pin 39 near the upper rear side of the plate 10. Near the front ends of the strips 38, there is arranged a pin 40 which is freely movable in a slot 41 in the plate 10, which slot is situated on the arc of a circle having its centre on the longitudinal centre line of the pin 39, about which the connecting strips 38 are movable. Between the pin 40 and the pin 39, the connecting strips 38 are provided with an aperture 43, through which can be passed a pin 42, which pin can also be passed through a corresponding aperture in the plate 10 the arrangement being such that hereby a movement of the pin 40 in the slot 41 is prevented. The upper end of each hook-shaped arm 27 is provided with a rod 27A which is arranged movably by means of a pin. The other end of the rod 27A is mounted near the threaded spindle 36 on the cross beam 30 by means of a pin (Figure 5). The length of the rod 27A as adjustable. On each carrier 26 for the scraper members 24 of a roller 20 there are arranged at equal distance from the ends rearwardly extending brackets 44, on which is mounted a carrier beam 45 which extends transversely to the direction of operative travel A and over the entire width of the roller 20 (Figure 1). The carrier beam 45 is located a least substantially parallel to the carrier 26. On the carrier beam 45 there are arranged side by side seed pipes 46, which at their lower ends are provided with sowing shoes (Figure 3). Seen transversely to the direction of operative travel A of the machine, the sowing shoes are arranged in staggered relationship relative to each other and are provided at the rear side with resilient tines 47. By means of a flexible tube 48, each of the seed pipes 46 is connected to a distributing mechanism 49 of a pneumatical seed drill 50. As is apparent from Figure 1, seen in the direction of operative travel A of the machine, the distributing mechanisms 49 are mounted on the rightmost bracket 44. By means of a supply tube 51 which near the upper side of the trestle 3 is supported on the frame beam 1 and which furthermore, when the machine is coupled, is passed to the front over the top side of the tractor, each of the distributing mechanisms 49 is connected to a fan and a container 51A. The container 51A and the fan are mounted on a frame 52 arranged at the lifting hitch at the front side of the tractor. During operation, the frame 52 is supported by a roller 53 which extends transversely to the direction of operative travel A and may be designed as a packer roller. The fan may be driven from the power take-off shaft at the front side of the tractor, while a supply mechanism for the supply of seed material from the container is driven by means of a wheel 54 rolling over the ground. Within each of the carriers 8 there is mounted on the shafts 11 of the respective soil working members 12 a pinion 55, the arrangement being such that the pinions on the shafts of adjacent soil working members are in driving connection with each other. Near the centre, the shaft of a soil working member 12 is extended and reaches by means of this extension to into a gear box 56. Inside the gear box 56, the extension is in driving connection via a bevel gear transmission with a shaft which extends transversely to the direction of operative travel A and is bearing-supported therein, which shaft is in driving connection via a speed variator 57 located at the outer side of the gear box with shaft which also extends transversely to the direction of operative travel A and projects beyond the gear box at the other side. By means of telescopic shafts 58 provided with universal joints, the relevant shafts are connected to the ends of a shaft which also extends transversely to the direction of operative travel A and is bearing-supported in a gear box 59 mounted on a bracket 60 located at the rear side of the central portion of the frame beam 1. Inside the gear box 59, the shaft extending transversely to the direction of operative travel A is in driving connection via a bevel gear transmission with a shaft which extends in the direction of operative travel A and projects beyond the gear box both at the front side and at the rear side. The end of the shaft projecting at the front side is connected to the power take-off shaft of the tractor by means of an intermediate shaft 61. The construction described in the foregoing operates as follows.

During operation of the above-described combination, the implement is coupled to the three-point lifting hitch of the tractor by means of the trestle 3 and from the power take-off shaft via the intermediate shaft 61 and the above-described transmission there is obtained such a drive for the soil working members 12 that adjacent soil working members are rotated in opposite directions and thereby cultivate by means of their soil working elements at least adjoining strips of soil.

During operation, the respective frame portions of the frame beam assume a fixed position relative to each other by means of a locking means (not shown in further detail). Upon movement in the direction of the arrow A, the machine rests on the ground by means of the height-adjustable ground wheels 5. With the aid of the rollers 20 located behind the soil working members 12, which rollers as stated above, each are designed as a packer roller, it is possible to set the working depth of the soil working members 12 prior to starting the job. This setting can be effected by means of the adjusting devices provided on the cross beam 30 and constituted by the threaded spindles 36, which adjusting devices are movably connected to the rear side of a carrier 8 by means of the connecting strips 38 constituting a guide for a carrier 8. A downward movement by means of the threaded spindle 36 of the pivotal connection between the strips 38 and the threaded spindle causes the pin 40 to move towards the upper side of the slot 41, whereby via the arms 17 the roller is moved upwardly, so that the working depth is increased. An upward movement of the said pivotal connection between the strips 38 and the threaded spindle causes the pin 40 to move downwardly in the slot 41, whereafter the arms 17 are moved downwardly, which results in a decrease of the working depth of the soil working members. By using the pin 40 and the slot 41, which constitute part of the guide for the carrier 8 pivotally connected to an adjusting device for the roller 20, there is obtained for each carrier 8 a possibility of movement in upward direction as a result of which, when the soil working members 12 hit on an obstacle in the soil, the whole of soil working members and carrier can move in height over a certain distance relarive to the frame beam 1 and the packer roller 20. This movement is not impeded, because the distributing mechanisms 49 and the seed pipes 46 of the seed drill 50 are mounted on carrier 26 which is supported by means of the hook-shaped arms 27 which is freely movable about the shafts 21 of the packer rollers 20. In this connection, the free movability is lamited by means of the rods 27A. Upon a change in the working depth of the soil working members 12, it is possible to effect an after-setting of the seed pipes 46 and the scraper members 24. During a movement of a carrier 8 upwardly, this movement is also passed through the parallelogram constructions 7 at the front side. In this manner there is obtained a movement in upward direction, while there is hardly any change in the position of the soil working members nor in the working. In order to bring the machine in a transport position, it is possible to lock the strips 38 relative to the plate 10 by means of a locking pin 42 and also to fix the parallelogram constructions 7 by means of a pin 7A (Figure 3).

During operation, with the aid of the fan provided at the front side of the tractor there is conveyed seed material supplied from the container 51A, having e.g. a supplying mechanism that is driven by the ground wheel 54 rolling over the ground, via the pipes 51 towards the respective distributing mechanisms 49, whereafter via the flexible tubes 48 and the seed pipes 46 it is introduced into the freshly cultivated soil by means of the sowing shoes. With the aid of the above-described implement it is possible to cultivate in one operating run in an effective manner a comparatively wide (approximately 6 ms) strips of soil and to sow same at the same time. As stated above, for the purpose of transportation it is possible to insert the locking pin 7A for the parallelogram constructions 7 and also the locking pin 42 for the connecting strips 38. Then, after the assembly has been lifted over some distance, the outer frame portions of the frame beam 1 can be folded about the pins 2 extending in the direction of operative travel A by means of the hydraulical adjusting cylinders 4. In doing so, the respective distributing mechanisms 49 are positioned side by side, so that they do not constitute an impediment to a compactly folded position. The frame 52 provided at the front side of the tractor can be lifted by means of a separate lifting hitch, so that the whole can be transported.

Figures 6 and 7 illustrate an embodiment wherein there is arranged an adjusting cylinder 62 instead of the rods 27A between the carrier or beam 26 for the scrapers and the arm 17 constituting part of the carrier construction for the roller 20.

In this connection, at the side of the carrier 26 there is arranged pivotably at an upwardly extending lug 64 the piston rod of the adjusting cylinder 62 by means of a fork-like portion and a pin 63. The housing of said adjusting cylinder is arranged pivotably at an upwardly extending lug 66 on the upper side of the arm 17 by means of a pin 65. The upper side of said housing of the adjusting cylinder 62 includes a stop 66A located between two plate-shaped portions 67, which portions are attached to the end of the piston rod. In two places, the plate-shaped portions are provided with three rows of superjacent apertures 68. Into said apertures 68 may be inserted the legs of a brace 69, which legs can be secured by means of a split pin (Figure 7). The legs of the brace 69 serve as stops for co-operation with the stops 66A, the arrangement being such that hereby the stroke of the adjusting cylinder 62 can be limited. In this embodiment, the distributing mechanisms 49 are arranged pivotably relative to the bracket 44 by means of a transverse shaft 70 extending at least substantially in the horizontal direction. Between the upper side of a support 71 for the distributing mechanism 49 and the cross beam 30 there is provided an adjusting rod 72, the ends of which are arranged pivotably to the support 71 and the cross beam 30, respectively. By means of said adjusting rod 72 forming adjusting means it can be ensured that, during operation, the distributing mechanism 49 assumes an at least substantially vertical position, which is of importance for a proper distribution of the seed material to be introduced into the soil. Besides, prior to the machine being brought into a transport position in the above-described manner, the distributing mechanism 49 can be pivoted rearwardly about the shaft 70 located at the lower side by means of said adjusting rod 72, so that, when the outer frame portions of the frame beam 1 are folded upwardly, the distributing mechanisms do not contact other machine parts. With the aid of the adjusting cylinders 62 forming adjusting members and being provided between the carrier or beam 26 and the arms 17, upon turning at the had of the field the carrier 26 can be pivoted about the shafts 21 of the roller 20, as a result of which said carrier with the brackets 44 and the seed pipes arrives into the position as indicated by dash lines (Figure 6). In doing so, this pivotal movement is limited by the rear leg of the brace 69. The lifting of the implement during turning at the head of the field prevents the seed pipes from being distorted and/or clogged with soil. The front leg of the brace 69 ensures that, when the implement is brought into the working position again, the carrier 26 is returned to the same positions before, so that the same sowing depth can be maintained. It is also possible to change the sowing depth by means of the brace 69, i.e. by removing the front leg thereof further towards the rear an increase in sowing depth will be obtained.

## Claims

1. A soil cultivating machine comprising a carrier (8) wherein are supported a plurality of rotary soil working members (12) and therebehind is arranged a height-adjustable roller (20), which roller (20) is designed as a packer roller and includes at its rear side a carrier (26) for scraper members (24), on which carrier there are arranged seed pipes (46) of an implement for introducing material into the soil, characterized in that the carrier (26) for the scraper members (24) is movable independently relative to the roller and lockable in a plurality of positions.

2. A soil cultivating machine as claimed in claim 1, characterized in that the carrier (26) is pivotable about an axis extending transverse to the direction of operative travel of the machine, said pivot axis coinciding with the axis of rotation of the roller (20).

3. A soil cultivating machine as claimed in claim 1 or 2, characterized in that between the carrier (26) for the scraper members (24) and a carrier (30) for the roller (20) there is provided at least one adjusting member (62).

4. A soil cultivating machine as claimed in claim 3, characterized in that near each end of the said carrier (30) there is provided an adjusting member (62), constituted by an adjusting cylinder.

5. A soil cultivating machine as claimed in claim 4, characterized in that there is provided at least one stop (69), by means of which the stroke of the adjusting cylinder (62) is limited.

6. A soil cultivating machine as claimed in claim 5, characterized in that on the housing of the adjusting cylinder (62) there is provided a stop (66A) co-operating with an adjustable stop (69) on the piston rod of said adjusting cylinder (62).

7. A soil cultivating machine as claimed in any one of claims 1 to 6, characterized in that on the carrier (26) for the scraper members (24) there is arranged pivotably a distributing mechanism (49) of the implement for introducing seed material into the soil, and there is provided an adjusting means (72), by means of which the position of the distributing mechanism (49) can be varied.

## Patentansprüche

1. Bodenbearbeitungsmaschine mit einem Träger (8), in welchem mehrere rotierende Bodenbearbeitungsglieder (12) abgestützt sind, und hinter dem eine höhenverstellbare Walze (20) angeordnet ist, die als Packerwalze ausgeführt ist und an ihrer Rückseite einen Träger (26) für Abstreifer (24) aufweist, auf welchem Särohre (46) eines Gerätes zum Einbringen von Saatgut in den Boden angeordnet sind,
dadurch gekennzeichnet, daß der Träger (26) für die Abstreifer (24) unabhängig von der Walze und relativ zu ihr bewegbar und in mehreren Positionen verriegelbar ist.

2. Bodenbearbeitungsmaschine nach Anspruch 1,
dadurch gekennzeichnet, daß der Träger (26) um eine Achse schwenkbar ist, die sich quer zur Arbeitsrichtung der Maschine erstreckt, und daß die Schwenkachse mit der Drehachse der Walze (20) zusammenfällt.

3. Bodenbearbeitungsmaschine nach den Ansprüchen 1 oder 2,
dadurch gekennzeichnet, daß zwischen dem Träger (26) für die Abstreifer (24) und einem Träger (30) für die Walze (20) mindestens ein Stellglied (62) angeordnet ist.

4. Bodenbearbeitungsmaschine nach Anspruch 3,
dadurch gekennzeichnet, daß nahe jedem Ende des Trägers (30) ein Stellglied (62) angeordnet ist, das durch einen Stellzylinder gebildet ist.

5. Bodenbearbeitungsmaschine nach Anspruch 4,
dadurch gekennzeichnet, daß mindestens ein Anschlag (69) vorgesehen ist, mittels dessen der Hub des Stellzylinders (62) begrenzt wird.

6. Bodenbearbeitungsmaschine nach Anspruch 5,
dadurch gekennzeichnet, daß auf dem Gehäuse des Stellzylinders (62) ein Anschlag (66A) angeordnet ist, der mit einem einstellbaren Anschlag (69) auf der Kolbenstange des Stellzylinders (62) zusammenwirkt.

7. Bodenbearbeitungsmaschine nach einem der Ansprüche 1 bis 6,
dadurch gekennzeichnet, daß auf dem Träger (26) für die Abstreifer (24) ein Verteiler (49) des Gerätes zum Einbringen des Saatgutes in den Boden schwenkbar angeordnet und eine Stellvorrichtung (72) vorgesehen ist, mittels derer die Position des Verteilers (49) verstellbar ist.

## Revendications

1. Machine pour cultiver le sol comprenant un élément porteur (8) dans lequel sont supportés une pluralité d'organes rotatifs de travail du sol (12) et derrière ceux-ci est disposé un rouleau (20) réglable en hauteur, lequel rouleau (20) est conçu comme un rouleau compacteur et comporte sur son côté postérieur un support (26) pour des organes râcleurs (24), sur lequel support sont disposés des tuyaux à semences (46) d'une machine pour introduire de la matière dans le sol,
**caractérisée** en ce que le support (26) pour les organes râcleurs (46) est mobile indépendamment du rouleau et peut être verrouillé en une pluralité de positions.

2. Machine pour cultiver le sol selon la revendication 1, caractérisée en ce que le support (26) est pivotant autour d'un axe s'étendant transversalement au sens de marche du travail de la machine, ledit axe de pivotement coïncidant avec l'axe de rotation du rouleau (20).

3. Machine pour cultiver le sol selon la revendication 1 ou 2, caractérisée en ce qu'il est prévu, entre le support (26) pour les organes râcleurs (24) et un support (30) pour le rouleau (20), au moins un organe de réglage (62).

4. Machine pour cultiver le sol selon la revendication 3, caractérisée en ce qu'il est prévu, près de chaque extrémité dudit support (30) un organe de réglage (62) constitué par un vérin de réglage.

5. Machine pour cultiver le sol selon la revendication 4, caractérisée en ce qu'il est prévu au moins une butée (69) au moyen de laquelle la course du vérin de réglage (62) est limitée.

6. Machine pour cultiver le sol selon la revendication 5, caractérisée en ce qu'il est prévu sur le boîtier du vérin de réglage (62) une butée (66A) coopérant avec une butée réglable (69) sur la tige du piston dudit vérin de réglage (62).

7. Machine pour cultiver le sol selon l'une quelconque des revendications 1 à 6, caractérisée en ce que, sur le support (26) pour les organes râcleurs (24) est monté pivotant un mécanisme distributeur (49) de la machine pour introduire de la semence dans le sol, et il est prévu un moyen de réglage (72) au moyen duquel on peut faire varier la position du mécanisme distributeur (49).
